# FASCICULE DE BREVET EUROPEEN

(11) **EP 1 899 887 B1**
(45) Date de publication et mention de la délivrance du brevet: **06.06.2012**
(21) Numéro de dépôt: 06778951.1
(22) Date de dépôt: 15.06.2006
(51) Int. Cl.: G06F 17/30, H04L 29/08, G06F 21/00

(54) **PROCEDE ET SYSTEME DE REPERAGE ET DE FILTRAGE D'INFORMATIONS MULTIMEDIA SUR UN RESEAU**
VERFAHREN UND SYSTEM ZUM VERFOLGEN UND FILTERN VON MULTIMEDIADATEN IN EINEM NETZ
METHOD AND SYSTEM FOR TRACKING AND FILTERING MULTIMEDIA DATA ON A NETWORK

(30) Priorité: 15.06.2005 FR 0506089
(43) Date de publication de la demande: 19.03.2008
(73) Titulaire: Hologram Industries, 77607 Marne La Vallee Cedex (FR)
(72) Inventeur: PIC, Marc, F-75013 Paris (FR); FISCHER, David, F-92420 Vaucresson (FR); NAVARRE, Michel, F-78290 Croissy Sur Seine (FR); TILMONT, Christophe, F-75019 Paris (FR)
(74) Mandataire: Thévenet, Jean-Bruno
(86) Numéro de dépôt international: PCT/FR2006/050605
(87) Numéro de publication internationale: WO 2006/134310

(56) Documents cités:
- WO-A-02/082271
- WO-A-03/067459
- FR-A- 2 863 080
- US-A1- 2005 043 548
- A. BRUGIDOU, G. KAHN: "CHARTE POUR LE DEVELOPPEMENT DE L'OFFRE LEGALE DE MUSIQUE EN LIGNE, LE RESPECT DE LA PROPRIETE INTELLECTUELLE ET LA LUTTE CONTRE LA PIRATERIE NUMERIQUE - ETUDE DES SOLUTIONS DE FILTRAGE DES ECHANGES DE MUSIQUE SUR INTERNET DANS LE DOMAINE DU PEER-TO-PEER RAPPORT D'ETUDE" MINISTÈRE DÉLÉGUÉ À L'ENSEIGNEMENT SUPÉRIEUR ET À LA RECHERCHE, [Online] 9 mars 2005 (2005-03-09), XP002372239 Extrait de l'Internet: URL:http://www.espace.gouv.fr/rapport/pira terienumerique.pdf> [extrait le 2006-03-14]
- ADVESTIGO: "Services adVigilante - Description des services de surveillance et contrôle des contenus" ONLINE PUBLICATION, [Online] décembre 2003 (2003-12), XP002372240 Extrait de l'Internet: URL:http://www.ddm.gouv.fr/pdf/advestigo_0 90204.pdf> [extrait le 2006-03-15]

## Description

La présente invention a pour objet un procédé et un système de repérage et de filtrage d'informations multimédia sur un réseau de transmission de données.

On constate sur des réseaux tels que la toile mondiale (web) une prolifération d'échanges illégaux de contenus, notamment dans le cadre d'échanges poste à poste (P2P) et dans le cadre de places de marché électronique.

On a déjà proposé d'effectuer un filtrage protocolaire afin de repérer des utilisateurs du protocole P2P. Toutefois, le protocole visé par le filtrage n'est pas illégal par lui-même et on ne peut donc bloquer un tel protocole dans son intégralité, dès lors qu'il est à même de faire transiter aussi bien des données légales que des données illégales.

On a également proposé d'effectuer des interceptions d'informations multimédia sur un réseau en procédant par reconnaissance du contenu.

Pour effectuer une interception par reconnaissance de contenu audio, vidéo ou image, on ne peut toutefois pas se contenter de procéder à des identifications de signatures exactes, telles que celles qui sont effectuées avec des stratégies de vérification de somme de contrôle ou celles qui font appel à une fonction de hachage comme l'algorithme de signature MD5 (Message Digest 5). En effet, la modification de quelques bits d'un fichier musical par exemple peut rendre inopérante une signature telle qu'une signature MD5 alors que le contenu du fichier modifié est encore parfaitement reconnaissable et exploitable par l'oreille humaine.

Par ailleurs, un procédé généralisé de contrôle exhaustif et systématique de toutes les transactions poste à poste constitue un mécanisme très lourd technologiquement si l'on veut filtrer l'intégralité des échanges s'opérant sur un réseau.

Les solutions de filtrage généralistes déjà proposées consistent essentiellement soit à bloquer les ports courants des échanges poste à poste, soit à détecter des échanges se faisant sur ces protocoles P2P. Toutefois, il est relativement facile de modifier le contexte de déploiement d'un protocole P2P, comme par exemple changer le port des communications pour éviter les filtrages. Par ailleurs, comme on l'a indiqué plus haut, il est difficilement imaginable, au niveau d'un fournisseur d'accès Internet, d'appliquer une règle de filtrage des protocoles P2P dans leur totalité à partir du moment où le protocole lui-même n'est pas illégal, que ce n'est que l'usage qui en est fait dans certains cas qui est illégal et que des contenus parfaitement légaux (par exemple des logiciels ou des codes sources libres de droit) sont échangés par ce biais.

Il existe donc un besoin pour effectuer un repérage et un filtrage de contenus prohibés sur des réseaux poste à poste ("peer-to-peer" ou P2P), d'une manière efficace et cependant technologiquement simple, et qui ne porte pas atteinte aux échanges poste à poste concernant des contenus parfaitement légaux.

On connaît déjà par le document de brevet WO 02/082271 un système pour détecter la transmission non autorisée d'oeuvres numérisées sur un réseau de transmission de données. Ce système repose toutefois essentiellement sur des critères de probabilités et met en oeuvre exclusivement des mesures de surveillance en ligne "à la volée".

Il existe également un besoin pour repérer et filtrer des annonces de produits contrefaits sur des places de marché électronique.

Les places de marché électronique, telles que des sites d'enchères en ligne, permettent la diffusion de produits contrefaits qui échappent aux services de police et de douanes de par la fragmentation de leur diffusion. Un revendeur de tels produits situé dans un pays donné peut s'enregistrer sous différentes identités d'emprunt et sous ce couvert commercialiser par petits lots, donc difficilement repérables, des produits contrefaits.

Il est donc nécessaire de pouvoir repérer et filtrer ces offres de produits contrefaits afin par exemple d'envoyer un avertissement en cas de détection de messages ayant un contenu illégal, tels que des annonces de produits contrefaits.

Un procédé connu de repérage et de filtrage d'informations multimédia sur un réseau de transmission de données est par ailleurs décrit dans un rapport d'étude de A. Brugidou et G. Kahn intitulé "Charte pour le développement de l'offre légale de musique en ligne, le respect de la propriété intellectuelle et la lutte contre la piraterie numérique - étude des solutions de filtrage des échanges de musique sur Internet dans le domaine du peer-to-peer" daté du 9 mars 2005 et mis en ligne sur Internet par le Ministre Délégué à l'Enseignement Supérieur et à la Recherche. Ce document évoque l'utilisation d'empreintes originales de référence calculées à partir d'informations multimédia de référence.

L'invention a ainsi pour objet de remédier aux inconvénients précités et de permettre de récupérer et de filtrer des informations multimédia sur un réseau de transmission de données numériques tel que l'Internet, d'une façon à la fois simple et efficace sans qu'il soit nécessaire de filtrer l'intégralité des échanges s'opérant sur le réseau, et d'une manière qui améliore la détection de la transmission non autorisée de données.

Ces buts sont atteints, conformément à l'invention, grâce à un procédé de repérage et de filtrage d'informations multimédia sur un réseau de transmission de données, caractérisé en ce qu'il comprend les étapes suivantes :
a) surveiller hors ligne des informations multimédia par rapport à des informations multimédia de référence, avec les étapes suivantes :
   a1) calculer des empreintes originales des informations multimédia de référence,
   a2) stocker les empreintes originales de référence calculées dans une base d'empreintes,
   a3) fouiller des informations multimédia sur le réseau et télécharger des informations suspectes,
   a4) calculer des empreintes suspectes des informations multimédia suspectes,
   a5) vérifier les empreintes suspectes par rapport aux empreintes originales et regrouper les empreintes suspectes en classes par rapprochement des empreintes similaires,
   a6) produire des données formelles comprenant des codes de hash protocolaires avec une affectation de priorité par classe d'empreintes et stocker les données formelles dans une base de données formelles de déclenchement,
   a7) alimenter par intermittence au moins un module d'intervention en ligne sur le réseau avec une copie au moins partielle de la base de données formelles de déclenchement,
b) effectuer au moins l'une des opérations suivantes à l'aide du module d'intervention en ligne :
   b1) intercepter en ligne des informations multimédia reconnues au moyen des données formelles présentes dans la base de données formelles de déclenchement et décider soit d'autoriser le passage, soit de provoquer le blocage des informations multimédia reconnues,
   b2) interroger en ligne des informations multimédia reconnues au moyen des données formelles présentes dans la base de données formelles de déclenchement et procéder au moins à une comptabilisation ou à un stockage des informations multimédia reconnues, ou à un déclenchement d'alerte lors de la reconnaissance des informations multimédia,
   b3) écouter en ligne des informations multimédia reconnues au moyen des données formelles présentes dans la base de données formelles de déclenchement et procéder au moins à une comptabilisation ou à un stockage des informations multimédia reconnues, ou à un déclenchement d'alerte lors de la reconnaissance des informations multimédia.

Avantageusement, on procède de façon périodique à un tri et un ordonnancement des données formelles de déclenchement de la base de données formelles, en sélectionnant les données formelles les plus importantes en fonction d'au moins un critère de priorité.

De préférence, lors d'une opération d'interception en ligne, d'écoute en ligne ou d'interrogation en ligne, on procède de façon périodique à une mise à jour des données formelles stockées dans la base de données formelles de déclenchement, à partir de données statistiques obtenues lors de l'opération d'interception en ligne, d'écoute en ligne ou d'interrogation en ligne.

Selon une caractéristique avantageuse, après l'étape de fouille des informations multimédia sur le réseau et le téléchargement des informations suspectes, on procède à un filtrage des informations multimédia suspectes à l'aide d'au moins un entête de sélection prédéterminé, et on ne procède au calcul des empreintes suspectes que pour les informations multimédia suspectes satisfaisant le critère de sélection prédéterminé.

Selon un mode particulier de réalisation, ledit critère de sélection prédéterminé comprend au moins l'un des éléments de sélection suivants pour un fichier contenant des informations multimédia suspectes : le type de fichier selon la nature du média qu'il comporte, l'état de corruption du fichier, la taille du contenu du fichier.

Avantageusement, on calcule des empreintes originales des informations multimédia de référence et des empreintes suspectes des informations multimédia suspectes selon le même procédé, mais on détermine des empreintes suspectes présentant des caractéristiques simplifiées par rapport à celles des empreintes originales.

Selon une autre caractéristique particulière, on modifie régulièrement l'adresse IP à partir de laquelle on procède à une fouille sur le réseau et un téléchargement afin de créer une anonymisation des échanges.

Selon un mode particulier de réalisation, pour réaliser l'interception en ligne des informations multimédia, on fait transiter les paquets de données présents sur le réseau de façon conditionnelle dans un module d'interception comprenant un étage tampon pour conserver de façon temporaire un paquet de données entrant, un étage d'analyse d'un paquet de données et un étage de déclenchement pour autoriser la transmission du paquet de données analysé ou décider de son rejet, et commander ensuite l'effacement du paquet dans l'étage tampon et l'introduction d'un paquet suivant dans l'étage d'analyse.

Dans ce cas, dans le module d'interception, on procède avantageusement à un filtrage préalable des paquets issus de l'étage tampon avant leur introduction dans l'étage d'analyse.

Selon une caractéristique particulière, dans le module d'interception, on utilise l'étage de déclenchement pour enregistrer en outre des données statistiques concernant les paquets rejetés ou transmis.

Selon un mode particulier de réalisation de l'invention, pour réaliser l'interrogation en ligne des informations multimédia, on procède à une interrogation ou une exploration du contenu d'un serveur web ou poste à poste à partir de requêtes, on procède à une comparaison des données collectées en réponse à ces requêtes avec celles de la base de données formelles de déclenchement et, en fonction du résultat de la comparaison, on déclenche une alerte, on collecte des informations ou on s'abstient d'intervenir.

Selon encore un autre mode particulier de réalisation de l'invention, pour réaliser l'écoute en ligne des informations multimédia, on procède au sein d'un serveur mandataire d'une part à l'écoute de requêtes de clients et à la recopie de ces requêtes et des données collectées en réponse à ces requêtes, et d'autre part à la transmission transparente de données entre client et serveur, on procède à une comparaison des données collectées recopiées avec celles de la base de données formelles de déclenchement et en fonction du résultat de la comparaison, on déclenche une alerte, on collecte des informations ou on s'abstient d'intervenir.

Dans les modes de réalisation précédents, on procède avantageusement à un filtrage préalable des données collectées avant d'effectuer leur comparaison avec celles de la base de données formelles de déclenchement.

Selon une application particulière du procédé selon l'invention, l'étape consistant à fouiller des informations multimédia sur le réseau et télécharger des informations suspectes est effectuée sur des contenus poste à poste proposés à l'échange, les données formelles comprennent des codes de hash, et l'interception ou l'écoute s'effectue en un point d'écoute du réseau poste à poste par extraction en temps réel des codes de hash des paquets de données d'échanges poste à poste.

L'invention a encore pour objet un système de repérage et de filtrage d'informations multimédia sur un réseau, caractérisé en ce qu'il comprend :
- un module de surveillance hors ligne des informations multimédia par rapport à des informations multimédia de référence, lequel module de surveillance hors ligne comprend au moins :
- un module de calcul d'empreintes originales des informations multimédia de référence,
- un module de stockage des empreintes originales de référence calculées,
- un module de fouille des informations multimédia sur le réseau,
- un module de téléchargement des informations suspectes détectées,
- un module de calcul des empreintes suspectes des informations multimédia suspectes téléchargées,
- un module de stockage des empreintes suspectes calculées,
- un module de vérification et de regroupement des empreintes suspectes en classes,
- un module de production de données formelles comprenant des codes de hash protocolaires avec une affectation de priorité par classes d'empreintes, et
- un module de stockage des données formelles constituant une base de données formelles de déclenchement,
et au moins l'un des modules suivants d'intervention en ligne sur le réseau :
a) un module d'interception en ligne comprenant au moins
   - un module de stockage local d'au moins une partie de la base de données formelles de déclenchement,
   - un module tampon,
   - un module d'analyse et de comparaison entre les données issues du module tampon et les données stockées dans le module de stockage local,
   - un module de déclenchement réagissant aux informations fournies par le module d'analyse, et
   - un module de transmission sélective des informations multimédia reconnues, activé par le module de déclenchement,
b) un module d'interrogation en ligne comprenant au moins :
   - un module de stockage local d'au moins une partie de la base de données formelles de déclenchement,
   - un module de requête fournissant des données collectées en réponse à des requêtes,
   - un module d'analyse et de comparaison entre lesdites données collectées en réponse et les données stockées dans le module de stockage local,
   - un module de déclenchement réagissant aux informations fournies par le module d'analyse, et
   - un module d'émission d'une alerte, de comptabilisation ou de stockage des informations multimédia reconnues, activé par le module de déclenchement,
c) un module d'écoute en ligne comprenant au moins :
   - un module de stockage local d'au moins une partie de la base de données formelles de déclenchement,
   - un serveur mandataire d'écoute de requêtes de clients et de recopie des requêtes et des données collectées en réponse aux requêtes,
   - un module d'analyse et de comparaison entre lesdites données collectées en réponse et les données stockées dans le module de stockage local,
   - un module de déclenchement réagissant aux informations fournies par le module d'analyse,
   - un module d'émission d'une alerte de comptabilisation ou de stockage des informations multimédia reconnues, activé par le module de déclenchement.

Selon une caractéristique particulière, le module d'interception en ligne comprend en outre un module d'émission d'une alerte, de comptabilisation ou de stockage des informations multimédia reconnues, activé par le module de déclenchement.

Avantageusement, le module de surveillance hors ligne comprend en outre un module de réordonnancement périodique des données formelles de déclenchement de la base de données formelles.

Selon un mode de réalisation particulier, le module d'interception en ligne, le module d'interrogation en ligne et le module d'écoute en ligne comprennent en outre chacun un module de filtrage disposé en entrée du module d'analyse.

L'invention s'applique d'une manière générale au repérage et au filtrage d'informations multimédia sous forme numérique pouvant comporter aussi bien des images, du texte, des signaux audio, des signaux vidéo ou un mélange de ces différents types de contenus.

D'autres caractéristiques et avantages de l'invention ressortiront de la description suivante de modes particuliers de réalisation, donnés à titre d'exemples, en référence aux dessins annexés, sur lesquels :
- les Figures 1A et 1B sont des schémas-blocs montrant les principaux éléments constitutifs d'un exemple de système conforme à l'invention pour effectuer le repérage et le filtrage d'informations multimédia sur un réseau, pour des applications respectivement à une interrogation en ligne et à une interception en ligne ou à une écoute en ligne,
- la Figure 2 est un schéma-bloc montrant un exemple de réalisation de module d'interception en ligne utilisable dans le système de la Figure 1B,
- la Figure 3 est un schéma-bloc montrant un exemple de réalisation de module d'interrogation en ligne utilisable dans le système de la Figure lA,
- la Figure 4 est un schéma-bloc montrant un exemple de réalisation de module d'écoute en ligne utilisable dans le système de la Figure 1B,
- la Figure 5 est un schéma-bloc montrant un exemple d'application de l'invention au repérage et au filtrage d'annonces de produits contrefaits sur des places de marché électroniques,
- la Figure 6 est un schéma-bloc montrant un exemple d'application de l'invention au repérage et au filtrage de contenus prohibés sur des réseaux poste à poste.

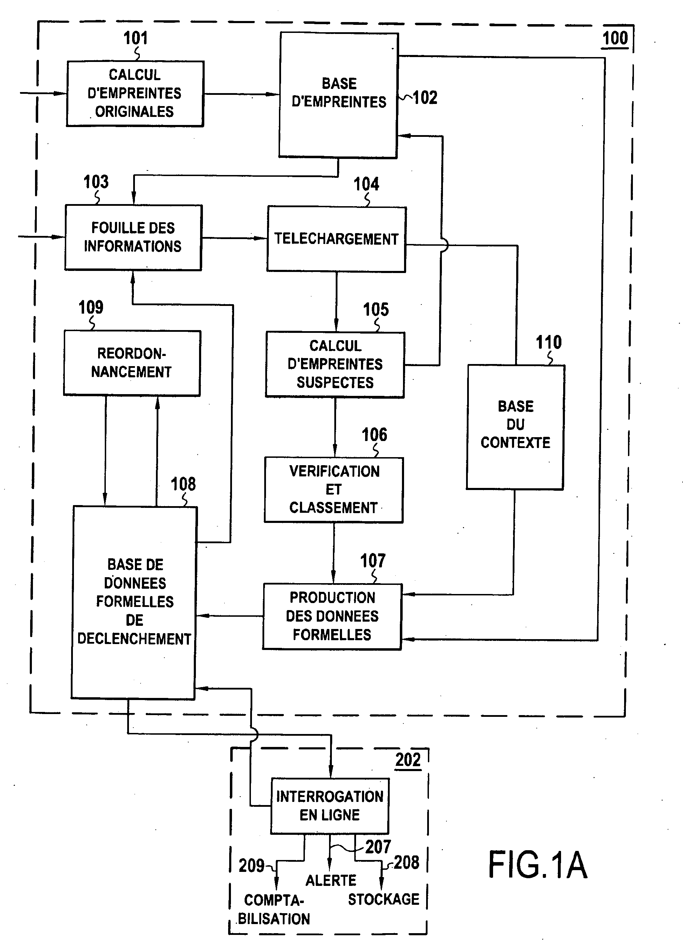

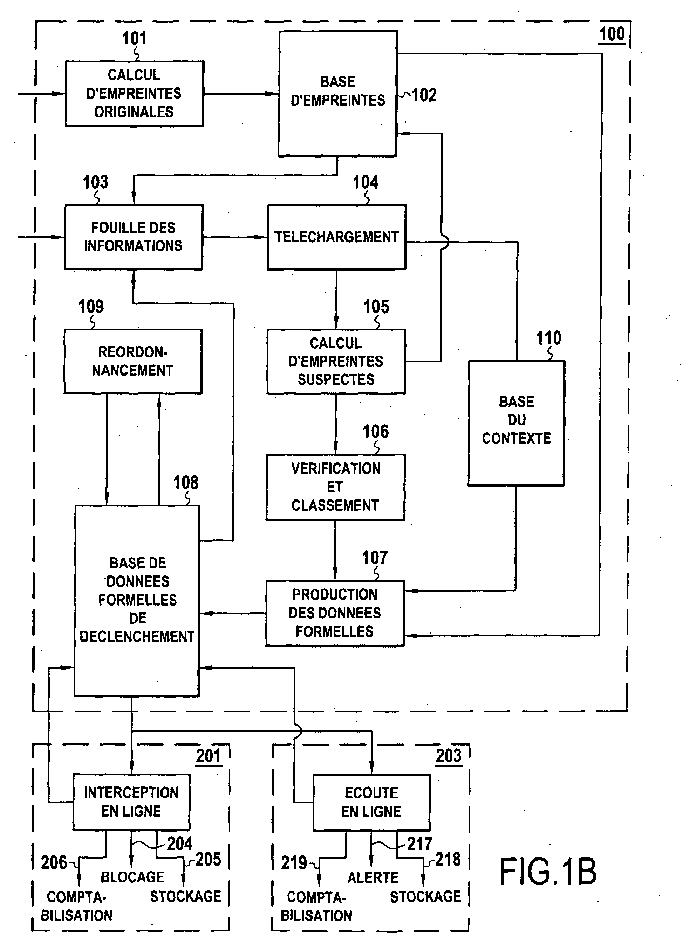

On décrira d'abord d'une manière générale, en référence aux Figures 1A et 1B, le procédé et le système selon l'invention qui permettent d'effectuer le repérage et le filtrage d'informations multimédia sur un réseau de transmissions de données numériques, tel que le réseau Internet, qui peut mettre en oeuvre aussi bien des serveurs web que des serveurs poste à poste (P2P).

L'invention met en oeuvre d'une part un premier ensemble 100 de surveillance hors ligne, c'est-à-dire sans contrainte de temps, des informations multimédia par rapport à des informations multimédia de référence et d'autre part un ou plusieurs modules 201, 202, 203 délocalisés d'intervention en ligne sur le réseau, c'est-à-dire agissant en temps réel.

Selon l'invention, au sein du module de surveillance hors ligne 100, une première étape consiste, à partir de document originaux faisant l'objet d'une protection, par exemple parce qu'ils bénéficient de droits d'auteur ou d'autres droits de propriété intellectuelle, à calculer des empreintes approchées de ces documents originaux de référence (module 101). Ces empreintes originales calculées sont ensuite stockées dans une base d'empreintes 102.

Pour la caractérisation des documents multimédia originaux à l'aide d'empreintes approchées, on peut utiliser divers procédés d'indexation et d'identification, tels que par exemple le procédé décrit dans la demande de brevet FR 2 863 080 qui donne plusieurs exemples prenant en compte les différents types de médias pouvant apparaître indépendamment ou en combinaison dans un document transmis sur un réseau de transmission de données numériques : audio, vidéo, images fixes, texte.

Dans une autre étape du procédé selon l'invention mise en oeuvre dans le module de surveillance hors ligne 100, on procède à une fouille des informations multimédia sur le réseau (module 103) et on procède au téléchargement des informations suspectes repérées à partir des informations fournies au module de fouille 103 par la base d'empreintes 102.

Le module de fouille 103 fouille ainsi les informations multimédia sur le réseau par interrogation de serveurs, qu'il s'agisse de serveurs web ou de serveurs poste à poste. Cette interrogation est menée à partir de requêtes générées automatiquement par le système au sein du module de fouille 103.

Le système peut ainsi procéder d'abord par extraction de mots-clefs depuis les informations contenues dans la liste des empreintes originales de la base d'empreintes 102 : extraction de mots des titres, informations connexes, contexte, type de contenu,...

Ces mots-clefs sont filtrés par pertinence et rareté grâce à des dictionnaires de fréquence. Les mots-clefs restants sont ensuite associés suivant différentes combinaisons directes pour produire des requêtes.

Différentes stratégies peuvent être employées, selon le contexte, pour retrouver des contenus suspects sur le réseau, à l'aide du module 103 de fouille des informations.

Dans le cas du contexte de réseaux poste à poste, dans lesquels chaque terminal est configuré pour servir à la fois de serveur et de client et deux terminaux en réseau P2P peuvent ainsi s'échanger des fichiers sans passer par un serveur central de redistribution de données, le système selon l'invention interroge avec les requêtes générées au sein du module de fouille 103 les serveurs de différents protocoles P2P pour obtenir les mises à disposition de contenus proposés par les intervenants.

Les serveurs P2P retournent au module 103 différentes propositions de mise à disposition caractérisées par des identifiants uniques fournis par un serveur P2P.

Le module de fouille 103 élimine alors les propositions ne correspondant pas aux besoins de l'enquête, par filtrage de certains mots-clefs ou de certains types de documents (on peut par exemple rejeter les fichiers se terminant par .exe).

De façon optionnelle, par interrogation de la base de données formelles de déclenchement 108, qui sera décrite plus loin, le module de fouille 103, en prenant en compte les données formelles déjà constituées, peut éliminer les propositions qui présentent des informations formelles identiques à celles déjà présentes dans la base de données formelles 108.

Le module de fouille 103 peut alors retrouver les machines d'internautes mettant à disposition des contenus suspects correspondant totalement ou partiellement aux documents originaux de référence.

Dans le module 104, le téléchargement des contenus suspects s'effectue de manière totale ou partielle, mais en quantité suffisante pour permettre la reconnaissance de contenus au moyen des mécanismes de production et vérification d'empreintes suspectes qui seront décrits plus loin en référence aux modules 105 à 107.

Dans le cas du contexte d'un réseau tel que le web, le module de fouille 103 explore les serveurs web définis dans les cibles.

A titre d'option, le module de fouille 103 peut d'abord interroger des serveurs web de référence pour découvrir de manière automatique les liens décrivant les serveurs web recherchés. L'interrogation de ces serveurs cibles se fait au moyen de requêtes qui sont produites de la même manière que dans le contexte P2P.

L'exploration des serveurs web définis dans les cibles s'effectue en téléchargeant une page web, en analysant le contenu de cette page, en découvrant les liens inclus dans celle-ci, en filtrant ces liens suivant certains critères, en téléchargeant les pages correspondant à ces liens et ainsi de suite récursivement jusqu'à avoir rempli un critère d'arrêt tel qu'un nombre de pages parcourues ou une profondeur de descente dans l'arborescence du site. Les pages web sont téléchargées avec l'ensemble de leur contenu associé (image, sons, vidéo, fichiers, etc.) ou avec seulement certaines catégories de ces médias.

Le filtrage des liens au sein des pages peut se faire au moyen d'une connaissance "a priori" du site. Par exemple, on peut savoir que les liens amenant à des publicités présentent une forme ou une syntaxe particulière, et on peut ainsi les éliminer de la fouille par ces critères.

On peut par ailleurs déclencher l'exploration d'un site non pas sur une page initiale que l'on fouille exhaustivement et récursivement, mais au contraire programmer un cheminement précis de l'exploration pour être à même d'extraire seulement certaines informations de site. Par exemple, un site présentant des listes de réponses organisées avec pour chaque réponse un lien utile et des liens décoratifs (images, résumés,...) pourra être exploité en définissant comme chemin d'exploration des règles d'analyse syntaxique précises ne retenant que les balises entourant les liens utiles et rejetant les autres.

La navigation entre plusieurs pages peut également être automatisée si l'on mélange les règles syntaxiques pour décider si un lien mérite d'être exploré ou non, et des règles de navigation qui vont préciser comment aller à une certaine page évoquée dans un lien même si le lien ne mène pas directement à cette page.

Ces règles de navigation peuvent également permettre de programmer la navigation vers des liens qui ne sont pas indiqués dans le document mais peuvent être découverts par interpolation. Par exemple, si deux liens d'une page évoquent des pages dénommées index2.html et index4.html, on pourra alors avantageusement chercher une page index3.html.

Lors du téléchargement des contenus (pages ou fichiers), l'ensemble du contexte de ces téléchargements est conservé dans une base de données, dénommée la base du contexte, qui n'a pas été représentée sur les Figures 1A et 1B.

Les documents suspects téléchargés au moyen des méthodes précédentes sont avantageusement sélectionnés par un premier filtrage pour déterminer s'ils méritent ou non d'être traités par la méthode de vérification des empreintes.

Les critères de sélection peuvent être de différentes natures et peuvent comprendre à titre d'exemples :
- le type de média (par exemple image),
- l'état du fichier (par exemple fichier corrompu),
- des informations, internes à ce fichier (taille du contenu, et critère selon lequel par exemple une taille d'image trop petite, inférieure à 5x5 pixels ne présente pas d'intérêt pour la vérification par la technologie d'empreintes),
- des informations calculées à partir des informations précédentes (par exemple critère selon lequel un rapport hauteur sur largeur d'une image supérieure à 20 signifie qu'il s'agit d'un séparateur ou d'un élément de décor).

Les fichiers téléchargés et retenus à l'issue de l'étape de filtrage optionnelle décrite ci-dessus font l'objet d'un calcul d'empreintes dans le module 105, selon la même technologie que celle utilisée pour le calcul d'empreintes originales effectué dans l'étape du module 101.

Des empreintes suspectes des documents suspects téléchargés et retenus peuvent ainsi être calculées selon des techniques décrites dans la demande de brevet français 2 863 080 précitée.

On notera que s'il est nécessaire d'utiliser, pour le calcul des empreintes suspectes, la même technologie que pour le calcul des empreintes originales, on peut utiliser une empreinte plus riche pour le document original de référence et une empreinte simplifiée pour le document suspect téléchargé. En effet, si l'on découvre qu'une partie de l'empreinte suspecte correspond à l'empreinte originale, cela sera suffisant pour déterminer qu'il y a une copie partielle et donc un plagiat.

Les empreintes suspectes calculées sont vérifiées par rapport aux empreintes originales et regroupées en classes par rapprochement des empreintes similaires. L'utilisation de caractéristiques formelles (titre, code de hash, identifiant de connexion,...) associées aux contenus permet d'étendre les regroupements déjà effectués à partir de la seule similarité d'empreintes.

Les empreintes suspectes sont stockées dans une base d'empreintes qui peut être par exemple combinée à la base d'empreintes 102 contenant les empreintes originales.

La vérification des empreintes suspectes et leur comparaison peut être effectuée par exemple selon les technologies décrites dans la demande de brevet FR 2 863 080 ou encore selon d'autres procédés comme par exemple en utilisant une distance de comparaison entre contenus.

Comme on l'a déjà indiqué précédemment, lors du téléchargement de contenus sous la forme de pages ou fichiers, l'ensemble du contexte de ces téléchargements est conservé dans une base de données 110 dénommée la base du contexte.

Cette base de données 110 est exploitée dans le module 107 pour trouver une représentation sous forme de données formelles des contenus validés par l'étape de vérification du module 106.

Pour chaque contenu validé, on extrait un ensemble d'informations formelles sélectionnées qui sont préexistantes, ou que l'on calcule, telles que par exemple la taille, le code de hash, le titre, l'identifiant de connexion d'utilisateur, les mots-clefs, le lieu de diffusion, le domaine du contenu,...

La nature de ces informations formelles peut être définie a priori par le système. Par exemple, dans le cas d'une fouille dans un contexte poste à poste, la taille et le code de hash sont deux éléments d'information permettant une identification quasi parfaite des contenus. Selon un autre exemple, dans la fouille de pages web sur un site dédié présentant des contenus proposés à la vente par un utilisateur donné, l'identifiant de cet utilisateur associé à une numérotation locale d'objet peut être une excellente identification de contenu.

La nature des informations formelles peut également être découverte grâce à un mécanisme d'apprentissage. Par exemple, un mécanisme du type réseau de neurones peut recevoir en entrée un vecteur agglomérant l'ensemble des informations formelles caractérisant le contenu, se voir imposer une valeur de sortie lors d'une phase d'apprentissage supervisée pour lui permettre de classer ce contenu d'après ces caractéristiques dans des classes prédéfinies (par exemple objets volés, recels, copies, contrefaçons,...). Cette pratique peut être réitérée jusqu'à ce que le mécanisme apprenne la relation entre certaines caractéristiques pour qu'il soit à même, lorsqu'on lui présente un nouveau contenu, d'en déduire dans quelle catégorie il doit être placé.

Les données formelles associées à un contenu suspect sont rangées dans une base de données 108 avec un identifiant permettant de retrouver ce contenu suspect et le contenu original auquel il correspond.

Un module 109 de réordonnancement permanent est avantageusement associé à la base de données formelles de déclenchement 108.

Il est en effet intéressant que certains contenus soient retenus comme prioritaires par rapport à d'autres, du fait que ces contenus correspondent à des éléments plus particulièrement critiques pour différentes raisons qui permettent de déterminer des critères de criticité. On peut ainsi noter à titre d'exemples les critères de criticité suivants :
- criticité de la période : par exemple si un film est divulgué avant sa sortie en salle,
- criticité de la forme : par exemple s'il existe une version de grande qualité pouvant remplacer un DVD,
- danger du contenu : si des contenus sont prohibés, par exemple du fait de leur caractère pédophile,
- fréquence du contenu : s'il existe une variante très fortement diffusée.

Le réordonnancement de la base de données formelles 108, à partir du module 109, comprend une sélection qui peut ainsi être effectuée par exemple à l'aide d'un processus faisant apparaître des priorités.

Chaque contenu est affecté d'une valeur en fonction du tableau des criticités, lequel tableau comprend des colonnes, dont chacune représente l'une des propriétés à prendre en considération, et des lignes dont chacune représente un contenu. A l'intersection des lignes et colonnes, un indice note un niveau de criticité par exemple entre 1 et 100. Un contenu est classé par le produit des différents indices le concernant.

D'autres procédés peuvent être utilisés pour effectuer cet ordonnancement qui peut se répéter en permanence, en fonction des nouvelles informations transmises à la base de données 108, certaines de ces informations provenant des modules d'intervention en ligne qui seront décrits plus loin.

D'une façon générale, chaque indice devant servir à une sélection peut être calculé automatiquement en fonction de la reconnaissance du contenu effectuée dans le module 106 de vérification et de classement, d'informations fournies lors de l'enregistrement des documents originaux, ainsi que de faits mesurés lors de l'intervention en ligne.

A titre d'exemple, la fréquence du contenu est un fait mesuré : si le fichier a été vu plusieurs fois durant un intervalle de temps, sa fréquence augmente.

Le critère de danger du contenu provient de la reconnaissance de contenu : ainsi, un contenu pédophile est classé comme tel dans la base de données des documents originaux (base d'empreintes 102).

La criticité de la période peut provenir d'un mélange de plusieurs facteurs. Ainsi, la reconnaissance d'un film particulier est connue dans la base des documents originaux et la date de lancement de ce film est également connue dans cette base. Pour un jour donné, la détermination du fait que ce film ne sortira en salle que deux semaines après ce jour donné signifie qu'il y a une criticité de période, ce film ne devant pas apparaître avant sa sortie en salle.

Le contenu étant classé dans la base de données formelles 108 par ordre de criticité, un seuil réglable permet de définir à partir de quelles valeurs de criticité un contenu doit être traité. Seules les données formelles des contenus sélectionnés par ce mécanisme seront transmises aux modules d'intervention en ligne qui vont maintenant être décrits.

On notera que l'on a représenté sur les Figures 1A et 1B une liaison entre la base d'empreintes 102 et le module 107 de production des données formelles. Toutefois, cette liaison est facultative et peut ne pas être utilisée dans certaines applications.

Au moins un module d'intervention en ligne 202 (Figure 1A), ou 201, 203 (Figure 1B) est alimenté par intermittence, par exemple une fois par jour (mais cette fréquence peut être adaptée aux besoins et aux ressources et n'est pas nécessairement régulière) avec une copie au moins partielle de la base de données formelles de déclenchement, cette copie contenant des données formelles correspondant aux contenus alors classés comme prioritaires.

Un module d'intervention en ligne sur le réseau de transmission de données peut agir de manière à intercepter, bloquer, constater, analyser des contenus qui transitent sur des réseaux P2P ou qui sont publiés sur des sites web.

On voit sur la Figure 1B de façon schématique un module 201 d'interception en ligne qui permet d'assurer un blocage sélectif 204 de contenus, avec également le cas échéant la possibilité d'assurer une comptabilisation 206 et/ou un stockage 205 d'informations bloquées.

Le module 202 d'interrogation en ligne représenté sur la Figure 1A permet de déclencher une alerte 207 en cas de détection de contenu suspect en réponse à une requête et peut également effectuer la comptabilisation 209 et/ou le stockage 208 des informations multimédia suspectes reconnues au moyen des données formelles associées à ces informations.

Le module 203 d'écoute en ligne représentée sur la Figure 1B permet de détecter de façon passive des contenus suspects identifiés au moyen des données formelles associées à ces contenus, et permet de la même manière de déclencher une alerte 217, et également le cas échéant d'effectuer une comptabilisation 219 et/ou un stockage 218 des informations suspectes reconnues.

On notera que le fait d'utiliser la base de données formelles 108, dupliquée au moins partiellement au niveau de chaque module d'intervention en ligne 201, 202, 203, au lieu de la base d'empreintes 102, permet d'accélérer fortement le traitement et de n'embarquer dans le dispositif d'interrogation, d'interception ou d'écoute qu'une faible partie des moyens techniques de l'ensemble du système, cette faible partie de moyens techniques pouvant par ailleurs être facilement adaptée pour prendre en compte des critères formels externes définis arbitrairement par les utilisateurs du système. Ainsi, par exemple, un utilisateur peut décider que seuls les paquets correspondant à des échanges d'un volume supérieur à un seuil doivent être traités, les autres n'étant pas considérés comme gênants.

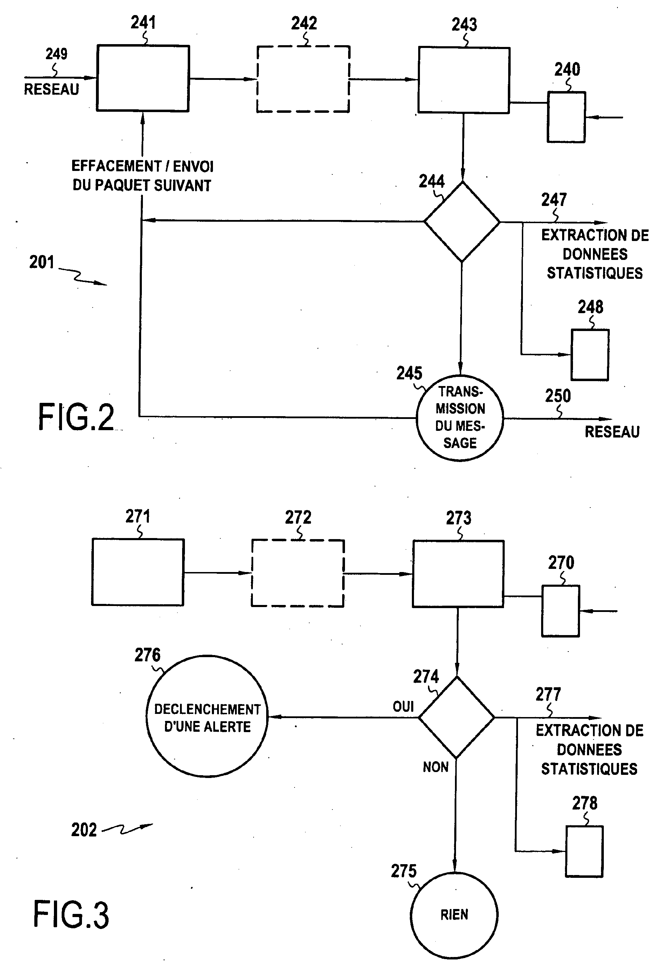

La Figure 2 montre un exemple de réalisation d'un module 201 d'interception en ligne qui est placé sur un réseau de transmission de données pour faire transiter de façon conditionnelle et proportionnelle entre son entrée 249 et sa sortie 250 des paquets de données transmis sur le réseau. Le module 201 est également conçu pour pouvoir enregistrer des informations.

De façon plus particulière, le module 201 comprend un module 240 de stockage local d'au moins une partie des données formelles de la base de données formelles de déclenchement 108.

Un module tampon 241 permet de conserver de façon temporaire un paquet de données entrant. Les paquets issus du module tampon 241 sont avantageusement filtrés dans un module optionnel de filtrage 242 qui permet de présélectionner certains paquets à partir d'une règle de filtrage, par exemple pour effectuer un filtrage protocolaire.

Les paquets issus du module tampon 241 qui n'ont pas été éliminés au niveau du module de filtrage 242 sont fournis à un module 243 d'analyse et de comparaison entre les données issues du réseau à travers le module tampon 241 et les données stockées dans le module de stockage local.

Un module de déclenchement 244 réagit aux informations fournies par le module d'analyse 243 pour décider d'autoriser ou non la transmission du message issu du réseau, à travers le module 245 de transmission sélective activé par le module de déclenchement 244, vers la sortie 250 du module 201 reliée au réseau.

Au sein du module d'analyse, on procède à une comparaison d'une chaîne d'octets extraite du paquet de données analysé avec des chaînes de référence correspondant aux données formelles stockées dans le module 240 de stockage local.

Si une chaîne d'octets est reconnue, le module de déclenchement 244 envoie au module tampon 241 un signal pour effacer le contenu qui vient d'être traité et demander l'envoi du paquet suivant. Ce signal est confirmé en cas de transmission du message par le module 245 de transmission sélective lorsqu'il y a eu accusé de réception de la bonne transmission de ce message.

Le module de déclenchement 244 permet également de commander le stockage éventuel des messages interceptés dans une mémoire 248, et de collecter sur une ligne 247 un certain nombre d'informations, notamment d'ordre statistique par exemple sur la nature des paquets en transit, les protocoles mis en jeu ou les contenus les plus fréquents. Ces informations peuvent avoir une influence sur la hiérarchisation des données formelles de la base de données formelles 108. Aussi, de telles informations de nature statistique peuvent être renvoyées périodiquement (par exemple chaque semaine ou quinzaine) ou lorsqu'elles sont suffisantes en nombre vers la base de données formelles 108.

La Figure 3 montre un exemple de module 202 d'interrogation en ligne.

Le module 202 permet d'interroger ou d'explorer le contenu d'un serveur web ou poste à poste à partir de requêtes élaborées dans un module de requête 271 à partir des données correspondant aux documents originaux, ou par une alimentation externe spécifique.

Les données collectées sur le réseau par le module de requête 271 en réponse aux requêtes formulées sont transmises le cas échéant à travers un module de filtrage 272 analogue au module de filtrage 242 vers un module d'analyse 273 qui opère une comparaison entre ces données collectives et les données formelles stockées dans le module 270 de stockage local d'au moins une partie de la base de données formelles de déclenchement 108.

Un module de déclenchement 274 réagit aux résultats des comparaisons effectuées dans le module d'analyse 273 pour selon le cas commander le déclenchement d'une alerte 276, le stockage dans une mémoire 278 des données collectées, l'extraction de données statistiques pouvant être renvoyées par une ligne 277 vers la base de données formelles 108, ou encore commander de ne rien faire du tout (action 275 de la Figure 3).

A titre d'illustration, si l'on considère par exemple la détection de recel en ligne, on peut détecter les contenus en situation de recel par reconnaissance des données ou critères formels extraits de la base de données formelles 108. Les données formelles constituent un ensemble d'informations corrélées pour produire une décision et peuvent dans le cas considéré comprendre par exemple un identifiant d'utilisateur, un nom de pays d'origine, un prix.

On notera que l'alerte déclenchée au niveau du module d'émission d'alerte 276 peut prendre diverses formes comme par exemple l'envoi de messages par courriel ou par SMS, l'affichage d'informations sur un site en ligne, ou encore l'utilisation d'un outil spécial de vigilance contre la contrefaçon, comme par exemple un mécanisme de verrouillage ou d'invalidation d'une offre.

Les données statistiques extraites peuvent être envoyées vers une base de données spécifique pouvant donner lieu à diverses applications comme par exemple le calcul de la répartition de droits perçus entre ayants droit.

Les informations stockées dans la mémoire 278 (comme dans la mémoire 248) peuvent être par exemple réunies autour d'un même fournisseur de contenu pour permettre de réaliser un inventaire des actions concernant ce diffuseur. Ces informations peuvent être stockées et horodatées au moyen d'un service automatisme d'archivage de documents pour une action différée.

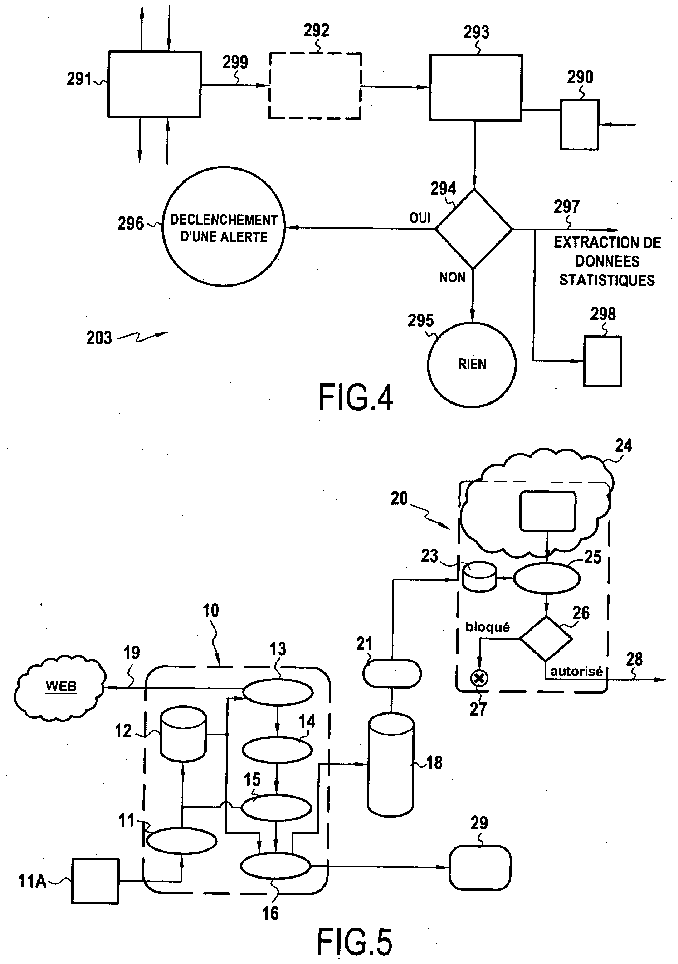

La Figure 4 montre un exemple de module 203 d'écoute en ligne. Un tel module peut comprendre des modules ou éléments 290 et 292 à 298 qui sont tout à fait similaires aux modules ou éléments 270 et 272 à 278 précédemment décrits en référence à la Figure 3. Ces modules ne seront donc pas décrits à nouveau.

Le module 203 d'écoute en ligne, qui constitue un module entièrement passif, comprend en outre un serveur mandataire 291 d'écoute de requêtes de clients et de recopie des requêtes et des données collectées en réponse aux requêtes.

Le serveur mandataire 291, qui peut être utilisé dans un contexte P2P ou un contexte web, assure des transmissions transparentes entre client et serveur mais envoie en entrée 299 du module d'analyse 293, ou du module de filtrage 292, s'il existe, une copie des requêtes de clients et des réponses à ces requêtes, qui ont transité par ce serveur mandataire 291.

On notera que le procédé et le système de repérage et de filtrage d'informations multimédia par séparation en données formelles peut présenter diverses variantes.

En particulier, au niveau du module 100 de surveillance hors ligne, il peut être avantageux de modifier régulièrement l'adresse IP à partir de laquelle on procède à une fouille sur le réseau, et un téléchargement, afin de rendre les échanges anonymes.

On décrira maintenant en référence à la Figure 5 un exemple particulier d'application de la présente invention au repérage et au filtrage des annonces de produits contrefaits sur des places de marché électronique.

Les places de marché électronique permettent une fragmentation de la diffusion de produits contrefaits, ceux-ci pouvant être proposés à la vente en petits lots par un même revendeur qui est enregistré sous différentes identités d'emprunt.

Le système illustré sur la Figure 5 permet notamment de remédier à cet inconvénient et de rendre repérable un tel comportement de vente de produits contrefaits par petits lots.

Sur la Figure 5, la référence 10 désigne un module de surveillance hors ligne qui pour l'essentiel est conforme au module de surveillance 100 des Figures 1A et 1B.

Les documents originaux 11A peuvent être constitués par exemple par une marque, un dessin, un modèle, une brochure susceptibles d'être contrefaits.

Le module 11 assure le calcul des empreintes originales des documents originaux 11A comme indiqué plus haut en référence aux Figures 1A et 1B. Ces empreintes originales sont stockées dans une base d'empreintes 12 à laquelle a accès un module de fouille 13 qui procède sur le réseau Internet (web) 19 à une fouille de surveillance portant sur un nombre important de documents, tels que des brochures et sur les informations qu'elles contiennent.

Le module 13 de fouille des annonces ou documents analogues coopère avec un module 14 de téléchargement des informations collectées par le module de fouille 13.

Un module 15 de calcul d'empreintes suspectes permet de calculer les empreintes des documents suspects collectés et téléchargés. Ces empreintes suspectes sont intégrées dans une base d'empreintes qui peut être combinée avec la base d'empreintes 12 des empreintes originales. La base d'empreintes 12 peut ainsi regrouper l'ensemble des empreintes originales et des empreintes suspectes en procédant par exemple à des regroupements par utilisateur virtuel.

Le module 16 utilise les empreintes suspectes et les empreintes originales pour procéder à des comparaisons et vérifications entre ces empreintes puis à un regroupement des annonces concernées par ces empreintes pour les organiser en classes d'équivalence par rapprochement des empreintes similaires.

Les classes d'équivalence permettent ensuite au moyen d'une analyse transitive de déduire les caractéristiques formelles des annonces (par exemple identifiant d'utilisateur, lieu de diffusion, éléments factuels du texte des brochures ou mots-clefs) correspondant à des cas de contrefaçons probables. Cette tâche est accomplie par un module de production de données formelles qui sur la Figure 5 est combiné avec le module 16. Les données formelles sont stockées dans une base de données formelles 18 qui constitue ainsi une base des identifiants factuels de contenus diffusés illégalement, avec un classement hiérarchique par ordre d'importance comme décrit précédemment en référence aux Figures 1A et 1B.

Un module 21 associé à la base de données formelles 18 assure la diffusion régulière vers un module 20 d'intervention en ligne, d'une partie de la base de données formelles 18 pour former une réplique locale 23 de cette base de données formelles.

Le module 20 d'intervention en ligne est actif en permanence et détecte automatiquement les nouvelles annonces au niveau du module 24. Ces nouvelles annonces, dans un module d'analyse 25, font l'objet d'une vérification des données formelles qu'elles comportent, par comparaison avec les données formelles contenues dans la base de données formelles 23. Un module de déclenchement 26 décide ensuite, en fonction du résultat de l'analyse, de retenir une nouvelle annonce détectée sur le réseau, si cette nouvelle annonce comprend un nombre suffisant de données formelles qui correspondent aux données formelles stockées dans la base 23. Sinon, l'annonce continue son chemin sur le réseau sur la ligne 28.

Lorsqu'une annonce a été retenue, elle peut être bloquée, comme indiqué par le repère 27, ou faire simplement l'objet d'une alerte. L'alerte peut consister par exemple en l'envoi d'un avertissement (émission par le module 29 commandé par le module 16 de vérification et classement).

Le module de surveillance 10 et la base de données formelles 18 travaillent hors ligne sur les annonces déjà publiées ainsi que sur l'historique des annonces, tandis que le module 20 d'intervention en ligne qui est actif en permanence détecte automatiquement les nouvelles annonces et les accepte ou les rejette en conséquence immédiatement.

Un module de réordonnancement permanent peut être associé à la base de données formelles 18, comme décrit en référence aux Figures 1A et 1B.

Le module 21 procède à une diffusion régulière, vers la réplique locale 23, des données formelles devenues hiérarchiquement plus importantes.

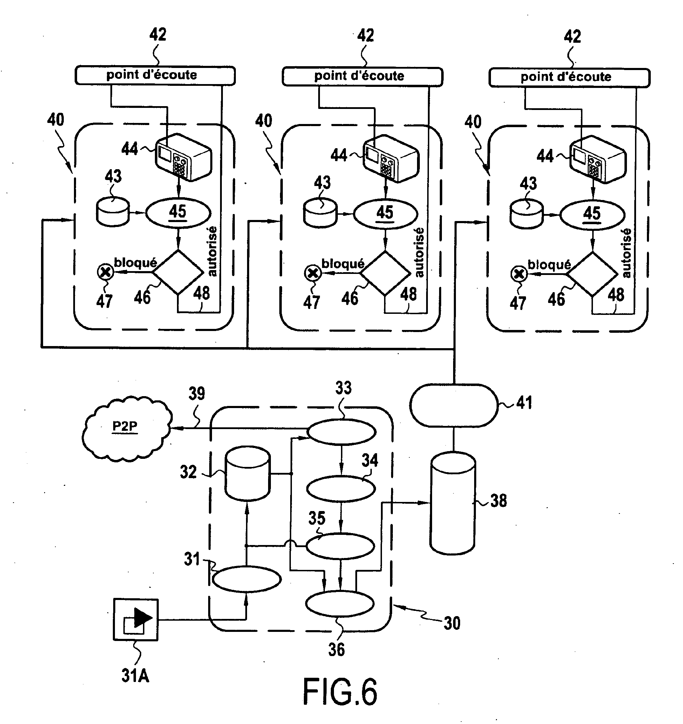

La Figure 6 décrit une application particulière de l'invention au repérage et au filtrage de contenus prohibés sur des réseaux poste à poste.

Les protocoles d'échanges de fichiers poste à poste permettent à des utilisateurs ne se connaissant pas de partager des fichiers au moyen d'informations déclaratives sur les contenus de ce fichier. Un utilisateur (télépartageur ou serveur) met à disposition un contenu sur le réseau à l'adresse de l'utilisateur. Quelqu'un à la recherche d'un contenu de ce type interroge l'un de ces serveurs, trouve l'information et envoie une requête de téléchargement à l'adresse du premier intervenant. Le partage de fichier commence alors.

Ces échanges se font dans un très grand nombre de cas en marge de la légalité. Les contenus sur lesquels s'applique un droit d'auteur ou un droit voisin sont rapidement diffusés d'intervenants à intervenants, avec une propagation exponentielle, sans respect de la législation sur les droits d'auteur.

Le système selon l'invention permet de remédier à ce problème en effectuant un filtrage sur les contenus transitant par un point de passage permettant de déterminer au sein d'un échange P2P si le contenu échangé est partagé dans des conditions légales ou dans des conditions qui enfreignent les lois sur le droit d'auteur.

Cette détection de contenu peut difficilement être faite sur une étude détaillée du contenu de par les contraintes d'exploitation du point d'interception. En effet, les débits des points de passage pouvant être exploités tels qu'un serveur d'accès à large bande (BAS) d'un opérateur ou un récepteur (LNR) d'un fournisseur d'accès, sont dimensionnés sur des débits qui sont souvent de l'ordre du gigabit par seconde. De tels débits rendent difficile la constitution de solutions de détection intégrant un calcul d'empreintes à la volée sur les paquets de données échangés, suivi d'une reconnaissance de ce contenu dans une base d'empreintes de documents originaux, représentative des droits d'auteur que l'on souhaite protéger et qui peut correspondre à quelques centaines de milliers de documents.

Selon l'invention grâce à la séparation entre la reconnaissance intelligente des contenus au moyen d'empreintes dans un module de surveillance 30, et la caractérisation des contenus au moyen de données formelles qui permettent une intervention en ligne en temps réel dans des modules 40 d'intervention en ligne, on peut effectuer un repérage et un filtrage de contenus prohibés de façon simple et fiable sur des réseaux P2P malgré la grande quantité de documents concernés.

Il est avantageux de choisir comme données formelles des codes de hash protocolaires. Ces codes de hash sont des signatures calculées au moyen de fonctions de hachage à sens unique fournies par les protocoles d'échange P2P. Ces codes de hash servent dans ces protocoles à s'assurer de l'intégrité, de la validité et de la compatibilité des morceaux de contenu échangés par les intervenants. Ces codes de hash sont calculés sur les logiciels clients de l'échange poste à poste et sont inclus dans les échanges à la fois dans les requêtes et dans les réponses.

Ces codes de hash sont par ailleurs placés dans les premiers blocs d'entête des paquets échangés ce qui facilite leur détection.

Sur la Figure 6, le module 31 assure le calcul des empreintes originales à partir des documents originaux à protéger 31A. Ces empreintes originales sont stockées dans une base d'empreintes originales 32 à laquelle a accès un module 33 de fouille des protocoles P2P disponibles sur le réseau 39.

Le module de fouille 33 recherche et observe les contenus P2P proposés à l'échange et coopère avec un module de téléchargement 34 qui transfère les contenus collectés à un module 35 de calcul d'empreintes suspectes. Le module 36 de vérification et classement regroupe au moyen des empreintes calculées les contenus téléchargés et les codes de hash correspondants et les caractérise par rapport aux contenus originaux fournis par les ayants droit.

Le module 36 incorpore également un module de production de données formelles, qui procède à un tri des codes de hash les plus intéressants (ceux qui représentent les échanges les plus dangereux) et fournit ces codes de hash constituant des données formelles à une base de données formelles 38 qui inclut ainsi les codes de hash des contenus diffusés illégalement, avec leur classement hiérarchique.

Un module 41 assure la diffusion régulière (par exemple quotidienne) des meilleurs données formelles de la base de données formelles 38, c'est-à-dire les données formelles hiérarchiquement les plus importantes, à des répliques locales 43 d'au moins une partie de la base de données formelles 38.

Dans chaque module 40 d'intervention en ligne sur le réseau, en un point d'écoute 42, on trouve un équipement 44 assurant le captage des données du réseau et la fonction de module tampon pour extraire en temps réel les données formelles comprenant les codes de hash protocolaires des paquets de données P2P.

Le module 30 qui procède aux calculs d'empreintes fouille ou observe les réseaux P2P sans contrainte de temps tandis que les modules 40 d'intervention en ligne procèdent à une détection de données formelles (codes de hash) en temps réel sur les paquets de données en transit au point de passage sélectionné 42.

Au sein d'un module 40, un module d'analyse 45 coopère avec la réplique locale 43 de la base de données formelles 38 et avec l'équipement 44 captant les données du réseau P2P dans un module tampon, pour détecter les entêtes des paquets de données et procéder à une analyse et vérification du code de hash par rapport aux codes de hash déjà stockés dans la réplique locale 43.

Selon le résultat de cette analyse, un module de déclenchement 46 décide de bloquer un paquet de données considéré comme ayant un contenu illégal (repère 47) ou de le laisser ressortir sur le réseau (repère 48).

Naturellement, dans l'exemple décrit ci-dessus de façon simplifiée, comme dans le cas général décrit en référence aux Figures 1A et 1B, le module d'intervention sur le réseau, qui est constitué par un module d'interception en ligne 60, peut être remplacé ou complété si on le souhaite par un module d'interrogation en ligne ou un module d'écoute en ligne.

D'une manière générale, selon les applications envisagées, le module 100 de surveillance hors ligne des informations multimédia par rapport à des informations multimédia de référence peut coopérer avec un seul module d'intervention en ligne choisi parmi le module d'interrogation en ligne 202, le module d'interception en ligne 201 et le module d'écoute en ligne 203 ou simultanément avec deux quelconques de ces modules différents d'intervention en ligne ou encore simultanément avec l'ensemble de ces trois types de modules d'intervention en ligne 201, 202, 203.

## Revendications

1. Procédé de repérage et de filtrage d'informations multimédia sur un réseau de transmission de données, **caractérisé en ce qu'**il comprend les étapes suivantes :
a) surveiller hors ligne des informations multimédia par rapport à des informations multimédia de référence, avec les étapes suivantes :
a1) calculer des empreintes originales des informations multimédia de référence,
a2) stocker les empreintes originales de référence calculées dans une base d'empreintes (102),
a3) fouiller des informations multimédia sur le réseau et télécharger des informations suspectes,
a4) calculer des empreintes suspectes des informations multimédia suspectes,
a5) vérifier les empreintes suspectes par rapport aux empreintes originales et regrouper les empreintes suspectes en classes par rapprochement des empreintes similaires,
a6) produire des données formelles comprenant des codes de hash protocolaires avec une affectation de priorité par classe d'empreintes et stocker les données formelles dans une base de données formelles de déclenchement (108),
a7) alimenter par intermittence au moins un module d'intervention en ligne sur le réseau avec une copie au moins partielle de la base de données formelles de déclenchement (108),
b) effectuer au moins l'une des opérations suivantes à l'aide dudit module d'intervention en ligne :
b1) intercepter en ligne des informations multimédia reconnues au moyen des données formelles présentes dans la base de données formelles de déclenchement (108) et décider soit d'autoriser le passage, soit de provoquer le blocage des informations multimédia reconnues,
b2) interroger en ligne des informations multimédia reconnues au moyen des données formelles présentes dans la base de données formelles de déclenchement (108) et procéder au moins à une comptabilisation ou à un stockage des informations multimédia reconnues, ou à un déclenchement d'alerte lors de la reconnaissance des informations multimédia,
b3) écouter en ligne des informations multimédia reconnues au moyen des données formelles présentes dans la base de données formelles de déclenchement (108) et procéder au moins à une comptabilisation ou à un stockage des informations multimédia reconnues, ou à un déclenchement d'alerte lors de la reconnaissance des informations multimédia.

2. Procédé selon la revendication 1, **caractérisé en ce qu'**on procède de façon périodique à un tri et un ordonnancement des données formelles de déclenchement de la base de données formelles (108), en sélectionnant les données formelles les plus importantes en fonction d'au moins un critère de priorité.

3. Procédé selon la revendication 1 ou la revendication 2, **caractérisé en ce que**, lors d'une opération d'interception en ligne d'écoute en ligne ou d'interrogation en ligne, on procède de façon périodique à une mise à jour des données formelles stockées dans la base de données formelles de déclenchement (108), à partir de données statistiques obtenues lors de l'opération d'interception en ligne, d'écoute en ligne ou d'interrogation en ligne.

4. Procédé selon l'une quelconque des revendications 1 à 3, **caractérisé en ce que**, après l'étape de fouille des informations multimédia sur le réseau et le téléchargement des informations suspectes, on procède à un filtrage des informations multimédia suspectes à l'aide d'au moins un entête de sélection prédéterminé, et on ne procède au calcul des empreintes suspectes que pour les informations multimédia suspectes satisfaisant ledit critère de sélection prédéterminé.

5. Procédé selon la revendication 4, **caractérisé en ce que** ledit critère de sélection prédéterminé comprend au moins l'un des éléments de sélection suivants pour un fichier contenant des informations multimédia suspectes : le type de fichier selon la nature du média qu'il comporte, l'état de corruption du fichier, la taille du contenu du fichier.

6. Procédé selon l'une quelconque des revendications 1 à 5, **caractérisé en ce que** l'on calcule des empreintes originales des informations multimédia de référence et des empreintes suspectes des informations multimédia suspectes selon le même procédé, mais on détermine des empreintes suspectes présentant des caractéristiques simplifiées par rapport à celles des empreintes originales.

7. Procédé selon l'une quelconque des revendications 1 à 6, **caractérisé en ce que** l'on modifie régulièrement l'adresse IP à partir de laquelle on procède à une fouille sur le réseau et un téléchargement afin de créer une anonymisation des échanges.

8. Procédé selon l'une quelconque des revendications 1 à 7, **caractérisé en ce que** pour réaliser l'interception en ligne des informations multimédia, on fait transiter les paquets de données présents sur le réseau (249) de façon conditionnelle dans un module d'interception (201) comprenant un étage tampon (241) pour conserver de façon temporaire un paquet de données entrant, un étage d'analyse (243) d'un paquet de données et un étage de déclenchement (244) pour autoriser la transmission du paquet de données analysé ou décider de son rejet, et commander ensuite l'effacement du paquet dans l'étage tampon (241) et l'introduction d'un paquet suivant dans l'étage d'analyse (243).

9. Procédé selon la revendication 8, **caractérisé en ce que** dans le module d'interception (201), on procède à un filtrage préalable des paquets issus de l'étage tampon (241) avant leur introduction dans l'étage d'analyse (243).

10. Procédé selon la revendication 8 ou la revendication 9, **caractérisé en ce que** dans le module d'interception (201), on utilise l'étage de déclenchement (244) pour enregistrer en outre des données statistiques concernant les paquets rejetés ou transmis.

11. Procédé selon l'une quelconque des revendications 1 à 7, **caractérisé en ce que** pour réaliser l'interrogation en ligne des informations multimédia, on procède à une interrogation ou une exploration du contenu d'un serveur web ou poste à poste à partir de requêtes, on procède à une comparaison des données collectées en réponse à ces requêtes avec celles de la base de données formelles de déclenchement (108) et, en fonction du résultat de la comparaison, on déclenche une alerte, on collecte des informations ou on s'abstient d'intervenir.

12. Procédé selon l'une quelconque des revendications 1 à 7, **caractérisé en ce que** pour réaliser l'écoute en ligne des informations multimédia, on procède au sein d'un serveur mandataire d'une part à l'écoute de requêtes de clients et à la recopie de ces requêtes et des données collectées en réponse à ces requêtes, et d'autre part à la transmission transparente de données entre client et serveur, on procède à une comparaison des données collectées recopiées avec celles de la base de données formelles de déclenchement (108) et en fonction du résultat de la comparaison, on déclenche une alerte, on collecte des informations ou on s'abstient d'intervenir.

13. Procédé selon la revendication 11 ou la revendication 12, **caractérisé en ce qu'**on procède à un filtrage préalable des données collectées avant d'effectuer leur comparaison avec celles de la base dé données formelles de déclenchement.

14. Procédé selon l'une quelconque des revendications 1 à 13, **caractérisé en ce que** l'étape consistant à fouiller des informations multimédia sur le réseau et télécharger des informations suspectes est effectuée sur des contenus poste à poste proposés à l'échange, **en ce que** les données formelles comprennent des codes de hash et **en ce que** l'interception ou l'écoute s'effectue en un point d'écoute du réseau poste à poste par extraction en temps réel des codes de hash des paquets de données d'échanges poste à poste.

15. Système de repérage et de filtrage d'informations multimédia sur un réseau, **caractérisé en ce qu'**il comprend :
- un module (100) de surveillance hors ligne des informations multimédia par rapport à des informations multimédia de référence, lequel module de surveillance hors ligne comprend au moins :
- un module (101) de calcul d'empreintes originales des informations multimédia de référence,
- un module (102) de stockage des empreintes originales de référence calculées,
- un module (103) de fouille des informations multimédia sur le réseau,
- un module (104) de téléchargement des informations suspectes détectées,
- un module (105) de calcul des empreintes suspectes des informations multimédia suspectes téléchargées,
- un module (102) de stockage des empreintes suspectes calculées,
- un module (106) de vérification et de regroupement des empreintes suspectes en classes,
- un module (107) de production de données formelles comprenant des codes de hash protocolaires avec une affectation de priorité par classes d'empreintes, et
- un module (108) de stockage des caractéristiques formelles constituant une base de données formelles de déclenchement,
et au moins l'un des modules suivants d'intervention en ligne sur le réseau :
a) un module d'interception en ligne (201) comprenant au moins
- un module (240) de stockage local d'au moins une partie de la base de données formelles de déclenchement,
- un module tampon (241),
- un module d'analyse (243) et de comparaison entre les données issues du module tampon (241) et les données stockées dans le module de stockage local (240),
- un module de déclenchement (244) réagissant aux informations fournies par le module d'analyse (243), et
- un module (245) de transmission sélective des informations multimédia reconnues, activé par le module de déclenchement (244),
b) un module d'interrogation en ligne (202) comprenant au moins :
- un module (270) de stockage local d'au moins une partie de la base de données formelles de déclenchement,
- un module de requête (271) fournissant des données collectées en réponse à des requêtes,
- un module d'analyse (273) et de comparaison entre lesdites données collectées en réponse et les données stockées dans le module de stockage local (270),
- un module de déclenchement (274) réagissant aux informations fournies par le module d'analyse (273),
- un module d'émission d'une alerte (276), de comptabilisation (277) ou de stockage (278) des informations multimédia reconnues, activé par le module de déclenchement (274),
c) un module d'écoute en ligne (203) comprenant au moins :
- un module (290) de stockage local d'au moins une partie de la base de données formelles de déclenchement,
- un serveur mandataire (291) d'écoute de requêtes de clients et de recopie des requêtes et des données collectées en réponse aux requêtes,
- un module d'analyse (293) et de comparaison entre lesdites données collectées en réponse et les données stockées dans le module de stockage local (290),
- un module de déclenchement (294) réagissant aux informations fournies par le module d'analyse (293),
- un module d'émission d'une alerte (296) de comptabilisation (297) ou de stockage (298) des informations multimédia reconnues, activé par le module de déclenchement (294).

16. Système selon la revendication 15, **caractérisé en ce que** le module d'interception en ligne (201) comprend en outre un module d'émission d'une alerte, de comptabilisation (247) ou de stockage (248) des informations multimédia reconnues, activé par le module de déclenchement (244).

17. Système selon la revendication 15 ou la revendication 16, **caractérisé en ce que** le module de surveillance hors ligne comprend en outre un module (109) de réordonnancement périodique des données formelles de déclenchement de la base de données formelles (108).

18. Système selon l'une quelconque des revendications 15 à 17, **caractérisé en ce que** le module d'interception en ligne (201), le module d'interrogation en ligne (202) et le module d'écoute en ligne (203) comprennent en outre chacun un module de filtrage (242 ; 272 ; 292) disposé en entrée du module d'analyse (243 ; 273 ; 293).

## Claims

1. Method for identifying and filtering multimedia data on a data transmission network, **characterized in that** it includes the following stages:
a) monitoring off-line the multimedia data related to reference multimedia data, with the following stages:
a1) calculating the original fingerprints of the reference multimedia data,
a2) storing original reference fingerprints calculated in a fingerprint database (102),
a3) searching for multimedia data on the network and downloading suspicious data,
a4) calculating suspicious fingerprints of suspicious multimedia data,
a5) checking suspicious fingerprints against original fingerprints and classifying suspicious fingerprints into classes of similar fingerprints,
a6) generating formal data comprising protocol hash codes with priority allocation by fingerprint class and storing formal data in a formal activation database (108),
a7) intermittently populating at least one on-line intervention module on the network with an at least partial copy of the formal activation database (108),
b) carrying out at least one of the following operations using said on-line intervention module:
b1) intercepting on-line the multimedia data recognized using the formal data in the formal activation database (108) and deciding whether to allow the multimedia data recognized to pass or to block it,
b2) querying on-line the multimedia data recognized using the formal data in the formal activation database (108) and at least recording or storing the multimedia data recognized, or triggering an alert when the multimedia data is recognized,
b3) listening on-line to multimedia data recognized using the formal data in the formal activation database (108) and at least reporting or storing the multimedia data recognized, or triggering an alert when the multimedia data is recognized.

2. Method according to Claim 1, **characterized in that** the formal activation data in the formal database (108) is sorted and organized periodically, selecting the most important formal data on the basis of at least one priority criterion.

3. Method according to Claim 1 or Claim 2, **characterized in that**, during an on-line intercept, on-line listening or on-line query operation, the formal data stored in the formal activation database (108) is updated periodically, using statistical data obtained during on-line intercept, on-line listening or on-line query operations.

4. Method according to any one of Claims 1 to 3, **characterized in that**, following the search stage for multimedia data on the network and downloading of suspicious data, the suspicious multimedia data is filtered using at least one predetermined selection heading, and the suspicious fingerprints are only calculated for the suspicious multimedia data that meet said predetermined selection criterion.

5. Method according to Claim 4, **characterized in that** said predetermined selection criterion includes at least one of the following selection elements for a file containing suspicious multimedia data: file type depending on the type of media it contains, state of corruption of the file, size of file content.

6. Method according to any one of Claims 1 to 5, **characterized in that** the original fingerprints of the reference multimedia data and the suspicious fingerprints of the suspicious multimedia data are calculated using the same method, but identifying suspicious fingerprints that have simplified characteristics compared to the original fingerprints.

7. Method according to any one of Claims 1 to 6, **characterized in that** the IP address from which network searches and downloads are effected is changed regularly in order to make the exchanges anonymous.

8. Method according to any one of Claims 1 to 7, **characterized in that** in order to intercept multimedia data on-line, data packets on the network (249) are conditionally routed to an intercept module (201) including a buffer stage (241) to temporarily store an incoming data packet, a data-packet analysis stage (243) and an activation stage (244) to authorize the transmission of the data packet analysed or to reject it, and then to order the deletion of the packet in the buffer stage (241) and the entry of the next packet into the analysis stage (243).

9. Method according to Claim 8, **characterized in that** in the intercept module (201), the packets coming from the buffer stage (241) are filtered before entering the analysis stage (243).

10. Method according to Claim 8 or Claim 9, **characterized in that** in the intercept module (201), the activation stage (244) is also used to record statistical data regarding packets rejected or transmitted.

11. Method according to any one of Claims 1 to 7, **characterized in that** in order to perform the on-line query of multimedia data, the content of a web server or peer-to-peer server is queried or explored using requests, the data collected in response to these requests is compared with the data in the formal activation database (108) and, depending on the result of the comparison, an alert is triggered, data is collected or no action is taken.

12. Method according to any one of Claims 1 to 7, **characterized in that** in order to listen to multimedia data on-line, within a proxy server, firstly client requests are listened to and the requests are copied along with the data collected in response to these requests, and secondly data is transmitted transparently between client and server, the data collected and copied is compared with the data in the formal activation database (108) and, depending on the result of the comparison, an alert is triggered, data is collected or no action is taken.

13. Method according to Claim 11 or Claim 12, **characterized in that** the data collected is filtered before being compared with the data in the formal activation database.

14. Method according to any one of Claims 1 to 13, **characterized in that** the stage that consists of searching for multimedia data on the network and downloading suspicious data is performed on peer-to-peer content to be exchanged, **in that** the formal data includes hash codes and **in that** the intercept or listening is effected from a listening point on the peer-to-peer network by retrieving in real time the hash codes of the data packets used in peer-to-peer exchanges.

15. System for identifying and filtering multimedia data on a network, **characterized in that** it includes:
- an off-line multimedia data monitoring module (100) related to reference multimedia data, this off-line monitoring module including at least:
- a calculation module (101) for the original fingerprints of the reference multimedia data,
- a storage module (102) for the original reference fingerprints calculated,
- a search module (103) for multimedia data on the network,
- a download module (104) for suspicious information detected,
- a calculation module (105) for the suspicious fingerprints of the suspicious multimedia data downloaded,
- a storage module (102) for the suspicious fingerprints calculated,
- a verification and classification module (106) for suspicious fingerprints,
- a module for generating (107) formal data comprising protocol hash codes with priority allocation by fingerprint class, and
- a storage module (108) for the formal characteristics constituting a formal activation database,
and at least one of the following modules for on-line intervention on the network:
a) an on-line intercept module (201) comprising at least
- a local storage module (240) for at least part of the formal activation database,
- a buffer module (241),
- a module for analysis (243) and comparison of the data supplied by the buffer module (241) with the data stored in the local storage module (240),
- an activation module (244) that reacts to the data supplied by the analysis module (243), and
- a selective transmission module (245) for the multimedia data recognized, activated by the activation module (244),
b) an on-line query module (202) comprising at least:
- a local storage module (270) for at least part of the formal activation database,
- a request module (271) to supply the data collected in response to requests,
- a module for analysis (273) and comparison of said response data collected with the data stored in the local storage module (270),
- an activation module (274) that reacts to the data supplied by the analysis module (273),
- an alert (276), recording (277) or storage (278) module for the multimedia data recognized, activated by the activation module (274),
c) an on-line listening module (203) comprising at least:
- a local storage module (290) for at least part of the formal activation database,
- a proxy server (291) for listening to client requests and copying the requests and data collected in response to the requests,
- a module for analysis (293) and comparison of said response data collected with the data stored in the local storage module (290),
- an activation module (294) that reacts to the data supplied by the analysis module (293),
- an alert (296), recording (297) or storage (298) module for the multimedia data recognized, activated by the activation module (294).

16. System according to Claim 15, **characterized in that** the on-line intercept module (201) also includes an alert, recording (247) or storage (248) module for the multimedia data recognized, activated by the activation module (244).

17. System according to Claim 15 or Claim 16, **characterized in that** the off-line monitoring module also includes a periodic reorganization module (109) for the formal activation data in the formal database (108).

18. System according to any one of Claims 15 to 17, **characterized in that** the on-line intercept module (201), the on-line query module (202) and the on-line listening module (203) also each include a filtering module (242 ; 272 ; 292) located at the input of the analysis module (243 ; 273 ; 293).

## Patentansprüche

1. Verfahren zum Auffinden und Filtern von Multimediainformationen in einem Netz zur Datenübertragung, **dadurch gekennzeichnet, daß** es die folgenden Schritte umfaßt:
a) Offline-Überwachung der Multimediainformationen im Vergleich zu Referenz-Multimediainformationen, mit den folgenden Schritten:
a1) Berechnen von Originalfingerabdrücken der Referenz-Multimediainformationen,
a2) Speichern der berechneten Referenz-Originalfingerabdrücke in einer Fingerabdruckdatenbank (102),
a3) Durchsuchen von Multimediainformationen im Netz und Herunterladen von verdächtigen Informationen,
a4) Berechnen von verdächtigen Fingerabdrücken der verdächtigen Multimediainformationen,
a5) Überprüfen der verdächtigen Fingerabdrücke im Vergleich zu den Originalfingerabdrücken und Gruppieren der verdächtigen Fingerabdrücke in Klassen durch Zusammenführen der ähnlichen Fingerabdrücke,
a6) Erzeugen von Formaldaten mit Protokoll-Hashcodes mit einer Prioritätszuweisung pro Fingerabdruckklasse und Speichern der Formaldaten in einer Auslöseformaldatenbank (108),
a7) intermittierendes Versorgen wenigstens eines Moduls zur Online-Intervention im Netz mit einer wenigstens teilweisen Kopie der Auslöseformaldatenbank (108),
b) Durchführen von wenigstens einem der folgenden Arbeitsschritte mit Hilfe des Online-Interventionsmoduls:
b1) Multimediainformationen, die mittels der in der Auslöseformaldatenbank (108) vorhandenen Formaldaten erkannt werden, online abfangen und entscheiden, entweder den Durchgang der erkannten Multimediainformationen zuzulassen oder deren Blockieren zu bewirken,
b2) Multimediainformationen, die mittels der in der Auslöseformaldatenbank (108) vorhandenen Formaldaten erkannt werden, online abfragen und wenigstens eine Erfassung oder eine Speicherung der erkannten Multimediainformationen oder eine Alarmauslösung bei Erkennen der Multimediainformationen vornehmen,
b3) Multimediainformationen, die mittels der in der Auslöseformaldatenbank (108) vorhandenen Formaldaten erkannt werden, online abhören und wenigstens eine Erfassung oder eine Speicherung der erkannten Multimediainformationen oder eine Alarmauslösung bei Erkennen der Multimediainformationen vornehmen.

2. Verfahren nach Anspruch 1, **dadurch gekennzeichnet, daß** periodisch eine Sortierung und ein Scheduling der Auslöseformaldaten der Formaldatenbank (108) durch Auswählen der wichtigsten Formaldaten in Abhängigkeit wenigstens eines Prioritätskriteriums durchgeführt werden.

3. Verfahren nach Anspruch 1 oder Anspruch 2, **dadurch gekennzeichnet, daß** während eines Online-Abfang-, Online-Abhör- oder Online-Abfrageschrittes periodisch eine Aktualisierung der in der Auslöseformaldatenbank (108) gespeicherten Formaldaten anhand von während des Online-Abfang-, Online-Abhör- oder Online-Abfrageschrittes erhaltenen statistischen Daten durchgeführt wird.

4. Verfahren nach einem der Ansprüche 1 bis 3, **dadurch gekennzeichnet, daß** nach dem Schritt des Durchsuchens der Multimediainformationen im Netz und dem Herunterladen der verdächtigen Informationen ein Filtern der verdächtigen Multimediainformationen mit Hilfe wenigstens eines vorbestimmten Auswahlkopfes durchgeführt wird und die Berechnung der verdächtigen Fingerabdrücke lediglich für die verdächtigen Multimediainformationen durchgeführt wird, die das vorbestimmte Auswahlkriterium erfüllen.

5. Verfahren nach Anspruch 4, **dadurch gekennzeichnet, daß** das vorbestimmte Auswahlkriterium wenigstens eines der folgenden Auswahlelemente für eine verdächtige Multimediainformationen enthaltende Datei umfaßt: den Typ der Datei entsprechend der Art des hierin enthaltenen Mediums, den Beschädigungszustand der Datei, die Größe des Inhalts der Datei.

6. Verfahren nach einem der Ansprüche 1 bis 5, **dadurch gekennzeichnet, daß** Originalfingerabdrücke der Referenz-Multimediainformationen und verdächtige Fingerabdrücke der verdächtigen Multimediainformationen nach dem gleichen Verfahren berechnet werden, aber verdächtige Fingerabdrücke ermittelt werden, die Merkmale aufweisen, welche gegenüber denjenigen der Originalfingerabdrücke vereinfacht sind.

7. Verfahren nach einem der Ansprüche 1 bis 6, **dadurch gekennzeichnet, daß** die IP-Adresse, anhand der ein Durchsuchen im Netz und ein Herunterladen durchgeführt werden, regelmäßig geändert wird, um eine Anonymisierung der Austauschvorgänge herzustellen.

8. Verfahren nach einem der Ansprüche 1 bis 7, **dadurch gekennzeichnet, daß** man -zum Durchführen des Online-Abfangens der Multimediainformationen- die im Netz vorhandenen Datenpakete (249) ein Abfangmodul (201) bedingt durchlaufen läßt, das eine Pufferstufe (241), um ein ankommendes Datenpaket temporär aufzubewahren, eine Stufe zum Analysieren (243) eines Datenpakets sowie eine Auslösestufe (244) umfaßt, um die Übertragung des analysierten Datenpakets zuzulassen oder sein Zurückweisen zu beschließen und um anschließend das Löschen des Pakets in der Pufferstufe (241) und das Einführen eines folgenden Pakets in die Analysestufe (243) zu befehlen.

9. Verfahren nach Anspruch 8, **dadurch gekennzeichnet, daß** in dem Abfangmodul (201) ein vorheriges Filtern der aus der Pufferstufe (241) kommenden Pakete vor ihrem Einführen in die Analysestufe (243) vollzogen wird.

10. Verfahren nach Anspruch 8 oder Anspruch 9, **dadurch gekennzeichnet, daß** in dem Abfangmodul (201) die Auslösestufe (244) verwendet wird, um ferner statistische Daten bezüglich der zurückgewiesenen oder übertragenen Pakete zu speichern.

11. Verfahren nach einem der Ansprüche 1 bis 7, **dadurch gekennzeichnet, daß** zum Durchführen der Online-Abfrage der Multimediainformationen eine Abfrage oder ein Abtasten des Inhalts eines Web- oder Peer-to-Peer-Servers anhand von Anfragen durchgeführt wird, ein Vergleich der als Reaktion auf diese Anfragen gesammelten Daten mit denjenigen der Auslöseformaldatenbank (108) vorgenommen wird und in Abhängigkeit des Ergebnisses des Vergleichs ein Alarm ausgelöst wird, Informationen gesammelt werden oder von einem Eingreifen abgesehen wird.

12. Verfahren nach einem der Ansprüche 1 bis 7, **dadurch gekennzeichnet, daß** zum Durchführen des Online-Abhörens der Multimediainformationen innerhalb eines Proxy-Servers einerseits das Abhören von Client-Anfragen und das Kopieren dieser Anfragen und der als Reaktion auf diese Anfragen gesammelten Daten sowie andererseits die transparente Übertragung von Daten zwischen Client und Server durchgeführt wird, ein Vergleich der kopierten gesammelten Daten mit denjenigen der Auslöseformaldatenbank (108) vorgenommen wird und in Abhängigkeit des Ergebnisses des Vergleichs ein Alarm ausgelöst wird, Informationen gesammelt werden oder von einem Eingreifen abgesehen wird.

13. Verfahren nach Anspruch 11 oder Anspruch 12, **dadurch gekennzeichnet, daß** ein vorheriges Filtern der gesammelten Daten durchgeführt wird, bevor sie mit denjenigen der Auslöseformaldatenbank verglichen werden.

14. Verfahren nach einem der Ansprüche 1 bis 13, **dadurch gekennzeichnet, daß** der Schritt, der darin besteht, Multimediainformationen im Netz zu durchsuchen und verdächtige Informationen herunterzuladen, an Peer-to-Peer-Inhalten, die beim Austausch angeboten werden, vollzogen wird, daß die Formaldaten Hashcodes umfassen und daß das Abfangen oder das Abhören an einer Abhörstelle des Peer-to-Peer-Netzes durch Echtzeitextraktion der Haschodes der Datenpakete von Peer-to-Peer-Austauschvorgängen erfolgt.

15. System zum Auffinden und Filtern von Multimediainformationen in einem Netz, **dadurch gekennzeichnet, daß** es umfaßt:
- ein Modul (100) zur Offline-Überwachung der Multimediainformationen im Vergleich zu Referenz-Multimediainformationen, wobei das Offline-Überwachungsmodul wenigstens umfaßt:
- ein Modul (101) zum Berechnen von Originalfingerabdrücken der Referenz-Multimediainformationen,
- ein Modul (102) zum Speichern der berechneten Referenz-Originalfingerabdrücke,
- ein Modul (103) zum Durchsuchen der Multimediainformationen im Netz,
- ein Modul (104) zum Herunterladen der erfaßten verdächtigen Informationen,
- ein Modul (105) zum Berechnen der verdächtigen Fingerabdrücke der heruntergeladenen verdächtigen Multimediainformationen,
- ein Modul (102) zum Speichern der berechneten verdächtigen Fingerabdrücke,
- ein Modul (106) zum Überprüfen und Gruppieren der verdächtigen Fingerabdrücke in Klassen,
- ein Modul (107) zum Erzeugen von Formaldaten mit Protokoll-Hashcodes mit einer Prioritätszuweisung pro Fingerabdruckklasse und
- ein Modul (108) zum Speichern der eine Auslöseformaldatenbank bildenden Formaleigenschaften,
sowie wenigstens eines der folgenden Module für eine Online-Intervention im Netz:
a) ein Modul zum Online-Abfangen (201), wenigstens umfassend:
- ein Modul (240) zum lokalen Speichern wenigstens eines Teils der Auslöseformaldatenbank,
- ein Puffermodul (241),
- ein Modul zur Analyse (243) und zum Vergleichen zwischen den aus dem Puffermodul (241) stammenden Daten und den in dem Modul zum lokalen Speichern (240) gespeicherten Daten,
- ein Auslösemodul (244), das auf die durch das Analysemodul (243) gelieferten Informationen reagiert, und
- ein Modul (245) zum selektiven Übertragen der erkannten Multimediainformationen, das durch das Auslösemodul (244) aktiviert wird,
b) ein Online-Abfragemodul (202), wenigstens umfassend:
- ein Modul (270) zum lokalen Speichern wenigstens eines Teils der Auslöseformaldatenbank,
- ein Anfragemodul (271), das als Reaktion auf Anfragen gesammelte Daten liefert,
- ein Modul zur Analyse (273) und zum Vergleichen zwischen den als Reaktion gesammelten Daten und den in dem Modul zum lokalen Speichern (270) gespeicherten Daten,
- ein Auslösemodul (274), das auf die durch das Analysemodul (273) gelieferten Informationen reagiert,
- ein Modul zum Aussenden eines Alarms (276), zum Erfassen (277) oder zum Speichern (278) der erkannten Multimediainformationen, das durch das Auslösemodul (274) aktiviert wird,
c) ein Online-Abhörmodul (203), wenigstens umfassend:
- ein Modul (290) zum lokalen Speichern wenigstens eines Teils der Auslöseformaldatenbank,
- einen Proxy-Server (291) zum Abhören von Clientanfragen und zum Kopieren der Anfragen und der als Reaktion auf die Anfragen gesammelten Daten,
- ein Modul zur Analyse (293) und zum Vergleichen zwischen den als Reaktion gesammelten Daten und den in dem Modul zum lokalen Speichern (290) gespeicherten Daten,
- ein Auslösemodul (294), das auf die durch das Analysemodul (293) gelieferten Informationen reagiert,
- ein Modul zum Aussenden eines Alarms (296), zum Erfassen (297) oder zum Speichern (298) der erkannten Multimediainformationen, das durch das Auslösemodul (294) aktiviert wird.

16. System nach Anspruch 15, **dadurch gekennzeichnet, daß** das Online-Abfangmodul (201) ferner ein Modul zum Aussenden eines Alarms, zum Erfassen (247) oder zum Speichern (248) der erkannten Multimediainformationen, das durch das Auslösemodul (244) aktiviert wird, umfaßt.

17. System nach Anspruch 15 oder Anspruch 16, **dadurch gekennzeichnet, daß** das Offline-Überwachungsmodul ferner ein Modul (109) zum periodischen Rescheduling der Auslöseformaldaten der Formaldatenbank (108) umfaßt.

18. System nach einem der Ansprüche 15 bis 17, **dadurch gekennzeichnet, daß** das Online-Abfangmodul (201), das Online-Abfragemodul (202) und das Online-Abhörmodul (203) ferner jeweils ein Filtermodul (242; 272; 292), das am Eingang des Analysemoduls (243; 273; 293) angeordnet ist, umfassen.
